# EUROPÄISCHE PATENTSCHRIFT

(11) **EP 2 666 612 B1**
(45) Veröffentlichungstag und Bekanntmachung des Hinweises auf die Patenterteilung: **28.11.2018**
(21) Anmeldenummer: 12169446.7
(22) Anmeldetag: 25.05.2012
(51) Int. Cl.: B33Y 10/00, B33Y 30/00, B33Y 50/00, B29C 64/268

(54) **Verfahren und Vorrichtung zum Abbilden wenigstens eines dreidimensionalen Bauteils**
Method and device for imaging at least one three-dimensional component
Procédé et dispositif de représentation d'au moins un composant en trois dimensions

(43) Veröffentlichungstag der Anmeldung: 27.11.2013
(73) Patentinhaber: MTU Aero Engines AG, 80995 München (DE)
(72) Erfinder: Zenzinger, Günter, 83666 Waakirchen (DE); Satzger, Wilhelm, 80804 München (DE); Dr. Bamberg, Joachim, 85221 Dachau (DE); Heß, Thomas, 81541 München (DE)

(56) Entgegenhaltungen:
- EP-A2- 1 466 718
- DE-U1-202010 010 771
- US-A1- 2009 206 065

## Beschreibung

Die Erfindung betrifft ein Verfahren zum Abbilden wenigstens eines dreidimensionalen Bauteils, das mittels eines generativen Fertigungsverfahrens hergestellt wird. Die Erfindung betrifft weiterhin eine Vorrichtung zur Durchführung eines derartigen Verfahrens.

Die DE 20 2010 010 771 U1 offenbart eine Laserschmelzvorrichtung, in welcher ein Bauteil durch aufeinanderfolgendes Verfestigen einzelner Schichten aus verfestigbarem Baumaterial durch Einwirkung einer Strahlung, insbesondere Laserstrahlung durch Aufschmelzen des Baumaterials hergestellt wird, wobei der durch einen punkt- und/oder linienförmigen Energieeintrag erzeugte Schmelzbereich durch eine Sensorvorrichtung hinsichtlich seiner Abmessung, Form und/oder Temperatur erfassbar ist und daraus Sensorwerte zur Evaluierung einer Bauteilqualität herleitbar sind. Es ist eine Speichereinrichtung vorgesehen, in welcher die zur Evaluierung der Bauteilqualität erfassten Sensorwerte zusammen mit den Sensor-Werten im Bauteil lokalisierenden Koordinatenwerten abspeicherbar sind. Weiterhin ist eine Visualisierungseinrichtung vorgesehen, die mit dem Speicher verbunden ist und durch welche die abgespeicherten Sensorwerte in einer zwei- oder mehrdimensionalen Darstellung bezogen auf ihren Erfassungsort im Bauteil darstellbar sind.

Die EP 1 466 718 A2 offenbart eine Vorrichtung zur Herstellung dreidimensionaler Objekte durch Lasersintern, die ein großflächiges Wärmebildsystem wie eine Infrarotkamera verwendet, die mehrere Temperaturen über den Zielbereich messen und diese Temperaturdaten als Rückmeldung an ein Steuersystem verwendet, das sowohl ein in Zonnen unterteiltes Strahlungsheizsystem einstellt als auch die Abtastgeschwindigkeit und die Laserleistung zur Steuerung der Temperaturen über den Zielbereich.

Aus der DE 10 2007 056 984 A1 ist ein Verfahren bekannt, bei welchem ein dreidimensionales Objekt oder Bauteil durch Lasersintern hergestellt wird, indem das Bauteil durch schichtweises Verfestigen eines pulverförmigen Materials an den dem Bauteil entsprechenden Stellen der betreffenden Bauteilschicht mit Hilfe von Laserstrahlen hergestellt wird. Von den aufgetragenen Pulverschichten werden mit Hilfe einer IR-Kamera Schichtbilder erfasst, um die einzelnen Bauteilschichten anhand von Temperaturunterschieden auf Unregelmäßigkeiten zu prüfen.

Als nachteilig an dem bekannten Verfahren ist der Umstand anzusehen, dass die Auswertung der einzelnen Schichtbilder des Bauteils vergleichsweise aufwändig ist.

Aufgabe der vorliegenden Erfindung ist es, ein Verfahren zum Abbilden wenigstens eines mittels eines generativen Fertigungsverfahrens hergestellten Bauteils zu schaffen, wobei das Verfahren eine verbesserte Beurteilung der Qualität des hergestellten Bauteils erlaubt. Eine weitere Aufgabe der Erfindung ist es, eine geeignete Vorrichtung zur Durchführung dieses Verfahrens zu schaffen.

Die Aufgaben werden erfindungsgemäß durch ein Verfahren gemäß Anspruch 1 sowie durch eine Vorrichtung gemäß Anspruch 9 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Vorrichtung und umgekehrt anzusehen sind.

Ein erfindungsgemäßes Verfahren zum Abbilden wenigstens eines dreidimensionalen Bauteils, das mittels eines generativen Fertigungsverfahrens hergestellt wird, umfasst zumindest die Schritte Ermitteln von wenigstens zwei Schichtbildern des Bauteils während seiner Herstellung durch selektives Laserschmelzen und/oder durch selektives Lasersintern mittels einer Detektionseinrichtung, welche ausgebildet ist, eine einen Energieeintrag in das Bauteil charakterisierende Messgröße ortsaufgelöst zu erfassen, wobei sich die Detektionseinrichtung außerhalb des Strahlengangs eines Lasers der Fertigungseinrichtung befindet und wobei wenigstens ein Schichtbild aus 100 bis 1000 Einzelbildern zusammengesetzt wird oder aus Einzelbilden zusammengesetzt wird, die jeweils zwischen 0,1 cm² und 1,0 cm² der Bauteilschicht abbilden und die jeweils eine Breite zwischen 0,1 mm und 0,5 mm der Bauteilschicht abbilden, wobei für jedes Einzelbild eine Belichtungszeit zwischen 1,0 ms und 5000 ms eingestellt wird, Erzeugen eines dreidimensionalen Abbilds des Bauteils anhand der ermittelten Schichtbilder, die das gesamte Bauteil und/oder einen verwendeten Bauraum des generativen Fertigungsverfahrens überlagerungsfrei abbilden, mittels einer Recheneinrichtung und Darstellen des Abbilds mittels einer Anzeigeeinrichtung. Mit Hilfe des erfindungsgemäßen Verfahrens ist es somit möglich, den Energieeintrag in das Bauteil während seiner Herstellung zu erfassen und räumlich aufgelöst aufzuzeichnen. Bei dem Bauteil kann es sich beispielsweise um ein Bauteil für eine thermische Gasturbine, für ein Flugzeugtriebwerk oder dergleichen handeln. Durch die anschließende Kombination bzw. das Stapeln der einzelnen Schichtbilder wird ein dreidimensionales Abbild erhalten, welches dementsprechend den Energieeintrag an jedem gemessenen Punkt des Bauteils charakterisiert. Durch Anzeigen dieses Abbilds wird schließlich eine besonders schnelle, einfache und genaue Kontrolle und Beurteilung der Fertigungsqualität des Bauteils ermöglicht. Im Unterschied beispielsweise zu einer gewöhnlichen Röntgenuntersuchung, bei der es sich um ein Projektionsverfahren mit sich überlagernden Strukturen handelt, können dabei die inneren Strukturen des Bauteils zerstörungs- und überlagerungsfrei so angezeigt werden, wie sie nach dem formalen Aufschneiden des Bauteils tatsächlich vorlägen. Im weiteren Unterschied zu einer rein geometrischen Auswertung des Bauteils erlaubt die Ermittlung des Energieeintrags eine vertiefte und umfassende Qualitätsanalyse des hergestellten Bauteils, da auch geometrisch unauffällige Materialungleichmäßigkeiten, fehlerhafte Prozessparameter des generativen Fertigungsverfahrens und dergleichen detektiert werden können. Indem die Schichtbilder das gesamte Bauteil und/oder einen verwendeten Bauraum des generativen Fertigungsverfahrens überlagerungsfrei abbilden, ist eine besonders umfassende und schnelle Kontrollmöglichkeit des Fertigungsverfahrens gegeben. Insbesondere wenn große Bauteile und/oder mehrere Bauteile gleichzeitig im Bauraum einer verwendeten generativen Fertigungseinrichtung hergestellt werden, ergeben sich auf diese Weise erhebliche Zeit- und Kosteneinsparungen. Die Verwendung eines generativen Schichtbauverfahrens ermöglicht in Verbindung mit der überlagerungsfreien Ermittlung von Schichtbildern des Bauteils während seiner schichtweisen Herstellung eine besonders präzise Beurteilung der Fertigungsqualität des Bauteils. Darüber hinaus erlaubt die Verwendung des generativen Schichtbauverfahrens eine schnelle und ökonomische Fertigung geometrisch komplexer Bauteile in großen Stückzahlen, was insbesondere bei der Herstellung von Triebwerksbauteilen erhebliche Zeit- und Kostenvorteile ermöglicht. Beim selektiven Laserschmelzen werden dünne Pulverschichten des oder der verwendeten Werkstoffe auf eine Fertigungszone aufgebracht, mit Hilfe eines oder mehrerer Laserstrahlen lokal aufgeschmolzen und verfestigt. Anschließend wird die Fertigungszone abgesenkt, eine weitere Pulverschicht aufgebracht und erneut lokal verfestigt. Dieser Zyklus wird solange wiederholt, bis das fertige Bauteil erhalten wird. Das fertige Bauteil kann anschließend bei Bedarf weiterbearbeitet oder sofort verwendet werden. Beim selektiven Lasersintern wird das Bauteil in ähnlicher Weise durch laserunterstütztes Sintern von pulverförmigen Werkstoffen hergestellt. Der durch die Laserstrahlung erfolgte Energieeintrag in die einzelnen Bauteilschichten wird dabei wie vorstehend beschrieben in Form von wenigstens zwei Schichtbildern erfasst und zur Darstellung des dreidimensionalen Abbilds des Bauteils herangezogen. Eine besonders detaillierte Qualitätskontrolle des Bauteils wird dadurch erzielt, dass wenigstens ein Schichtbild aus mehreren, insbesondere aus 100 bis 1000 Einzelbildern zusammengesetzt wird oder aus Einzelbilden zusammengesetzt wird, die jeweils zwischen 0,1 cm² und 1,0 cm² der Bauteilschicht abbilden und die jeweils eine Breite zwischen 0,1 mm und 0,5 mm der Bauteilschicht abbilden. Mit anderen Worten ist es erfindungsgemäß vorgesehen, dass wenigstens ein, mehrere oder alle Schichtbilder jeweils aus mehreren Einzelbildern zusammengesetzt werden, wodurch die Auflösung des Abbilds vorteilhaft gesteigert wird. Unter 0,1 cm² bis 1,0 cm² der Bauteilschicht sind insbesondere Flächen von 0,1 cm², 0,2 cm², 0,3 cm², 0,4 cm², 0,5 cm², 0,6 cm², 0,7 cm², 0,8 cm², 0,9 cm² oder 1,0 cm² sowie entsprechende Zwischenwerte zu verstehen. Unter eine Breite zwischen 0,1 mm und 0,5 mm sind insbesondere Breiten von 0,1 mm, 0,2 mm, 0,3 mm, 0,4 mm oder 0,5 mm sowie entsprechende Zwischenwerte zu verstehen. Weiterhin kann grundsätzlich vorgesehen sein, dass die Einzelbilder unterschiedliche Belichtungszeiten aufweisen, so dass das resultierende Schichtbild einem so genannten "High Dynamic Range"-Bild, das heißt ein Bild mit einem besonders hohem Dynamikumfang entspricht. Hierdurch ist eine zusätzlich verbesserte Kontrollmöglichkeit der Bauteilqualität gegeben. Unter einer Belichtungszeit zwischen 1,0 ms und 5000 ms sind dabei insbesondere Belichtungszeiten von 1 ms, 50 ms, 100 ms, 150 ms, 200 ms, 250 ms, 300 ms, 350 ms, 400 ms, 450 ms, 500 ms, 550 ms, 600 ms, 650 ms, 700 ms, 750 ms, 800 ms, 850 ms, 900 ms, 950 ms, 1000 ms, 1050 ms, 1100 ms, 1150 ms, 1200 ms, 1250 ms, 1300 ms, 1350 ms, 1400 ms, 1450 ms, 1500 ms, 1550 ms, 1600 ms, 1650 ms, 1700 ms, 1750 ms, 1800 ms, 1850 ms, 1900 ms, 1950 ms, 2000 ms, 2050 ms, 2100 ms, 2150 ms, 2200 ms, 2250 ms, 2300 ms, 2350 ms, 2400 ms, 2450 ms, 2500 ms, 2550 ms, 2600 ms, 2650 ms, 2700 ms, 2750 ms, 2800 ms, 2850 ms, 2900 ms, 2950 ms, 3000 ms, 3050 ms, 3100 ms, 3150 ms, 3200 ms, 3250 ms, 3300 ms, 3350 ms, 3400 ms, 3450 ms, 3500 ms, 3550 ms, 3600 ms, 3650 ms, 3700 ms, 3750 ms, 3800 ms, 3850 ms, 3900 ms, 3950 ms, 4000 ms, 4050 ms, 4100 ms, 4150 ms, 4200 ms, 4250 ms, 4300 ms, 4350 ms, 4400 ms, 4450 ms, 4500 ms, 4550 ms, 4600 ms, 4650 ms, 4700 ms, 4750 ms, 4800 ms, 4850 ms, 4900 ms, 4950 ms oder 5000 ms sowie entsprechende Zwischenwerte wie beispielsweise 50 ms, 55 ms, 60 ms, 65 ms, 70 ms, 75 ms, 80 ms, 85 ms, 90 ms, 95 ms, 100 ms, 105 ms, 110 ms, 115 ms, 120 ms, 125 ms, 130 ms, 135 ms, 140 ms, 145 ms, 150 ms, 155 ms, 160 ms, 165 ms, 170 ms, 175 ms, 180 ms, 185 ms, 190 ms, 195 ms, 200 ms, 205 ms, 210 ms, 215 ms, 220 ms, 225 ms, 230 ms, 235 ms, 240 ms, 245 ms, 250 ms, 255 ms, 260 ms, 265 ms, 270 ms, 275 ms, 280 ms, 285 ms, 290 ms, 295 ms, 300 ms, 305 ms, 310 ms, 315 ms, 320 ms, 325 ms, 330 ms, 335 ms, 340 ms, 345 ms, 350 ms, 355 ms, 360 ms, 365 ms, 370 ms, 375 ms, 380 ms, 385 ms, 390 ms, 395 ms, 400 ms, 405 ms, 410 ms, 415 ms, 420 ms, 425 ms, 430 ms, 435 ms, 440 ms, 445 ms, 450 ms, 455 ms, 460 ms, 465 ms, 470 ms, 475 ms, 480 ms, 485 ms, 490 ms, 495 ms oder 500 ms zu verstehen. Hierdurch kann die Ermittlung der Schichtbilder optimal an das jeweils verwendete generative Fertigungsverfahren, die Herstellungsparameter und an das Material und die Geometrie des Bauteils angepasst werden. Grundsätzlich hat es sich als vorteilhaft gezeigt, wenn die Belichtungszeit derart eingestellt wird, dass das Zeitfenster einerseits groß genug ist, um den Energieeintrag zu erfassen, aber andererseits klein genug ist, um keine oder möglichst wenig störende Hintergrundstrahlung aufzusummieren.

Eine besonders detaillierte und umfassende Kontrolle des Bauteils wird in einer Ausgestaltung der Erfindung dadurch erzielt, dass beim generativen Schichtbauverfahren für jede Bauteilschicht ein den Energieeintrag in die Bauteilschicht charakterisierendes Schichtbild ermittelt wird.

In einer weiteren vorteilhaften Ausgestaltung der Erfindung ist vorgesehen, dass die Detektionseinrichtung einen hochauflösenden Detektor und/oder einen IR-sensitiven Detektor, insbesondere einen CMOS- und/oder sCMOS- und/oder CCD-Sensor zum Erfassen von IR-Strahlung als Messgröße umfasst. Dies erlaubt eine besonders einfache, präzise und kostengünstige Ermittlung des Energieeintrags. Darüber hinaus kann anhand von Temperaturunterschieden im ermittelten IR-Schichtbild die Qualität der betreffenden Bauteilschicht besonders präzise ausgewertet werden, da beispielsweise Ungleichmäßigkeiten im Material, in der Schichtdicke oder im Temperatureintrag besonders präzise ermittel- und darstellbar sind.

In einer weiteren vorteilhaften Ausgestaltung der Erfindung ist vorgesehen, dass für jedes Einzelbild eine Belichtungszeit zwischen 50 ms und 500 ms eingestellt wird.

Weitere Vorteile ergeben sich, indem das Abbild des Bauteils mittels der Recheneinrichtung mit einem Soll-Abbild des Bauteils verglichen wird. Dies erlaubt eine besonders einfache und zuverlässige Kontrolle, ob das hergestellte Bauteil innerhalb erlaubter Fertigungstoleranzen liegt oder nicht. Der Vergleich erfolgt dabei vorzugsweise mit Hilfe der ohnehin vorhandenen Recheneinrichtung, beispielsweise einem Einzelplatzrechner, einer Workstation oder dergleichen.

Dabei hat es sich in einer weiteren vorteilhaften Ausgestaltung der Erfindung als vorteilhaft gezeigt, wenn als Soll-Abbild ein Datenmodell und/oder ein Röntgen-Abbild des Bauteils und/oder ein Abbild eines Referenz-Bauteils verwendet wird. Indem als Soll-Abbild ein Datenmodell verwendet wird, kann eine Kontrolle anhand einer idealen Soll-Geometrie vorgenommen werden. Durch einen Vergleich mit einem Röntgen-Abbild des Bauteils können insbesondere innere Defekte, Fehlstellen, Fremdeinschlüsse, Pulverqualität, Schichtdicke, Ungänzen, Bauhomogenität im Bauraum usw. sowie die Bedeutung dieser Abweichungen vom Soll für die Qualität des Bauteils besonders zuverlässig ermittelt werden. Weiterhin kann grundsätzlich vorgesehen sein, dass das Abbild des Bauteils mit einem Abbild eines zuvor und/oder gleichzeitig hergestellten Referenz-Bauteils verglichen wird.

Weiterhin kann grundsätzlich vorgesehen sein, dass mechanische Parameterwerte, beispielsweise die Zug- und/oder Biegefestigkeit in Richtung der mechanischen Hauptbelastungsachsen, metallurgische Untersuchungsergebnisse von Fehlerstellen etc. für das hergestellte Bauteil ermittelt und in Zusammenhang mit dem Abbild gebracht werden. Dies erlaubt eine zuverlässige Beurteilung etwaiger Abweichungen, Defekte, Fehlstellen etc. im Hinblick auf die Qualität des Bauteils und eine entsprechend verbesserte Online-Prozesskontrolle für das generative Fertigungsverfahren.

In einer weiteren vorteilhaften Ausgestaltung der Erfindung ist vorgesehen, dass Abweichungen zwischen dem Abbild und dem Soll-Abbild mittels der Anzeigeeinrichtung dargestellt werden. Dies erlaubt eine besonders einfache und anschauliche Qualitätskontrolle des Bauteils. Dabei kann grundsätzlich vorgesehen sein, dass die Abweichungen unabhängig vom Abbild und/oder mit dem Abbild überlagert dargestellt werden. Das Abbild kann beispielsweise transparent bzw. semi-transparent dargestellt werden, während die Abweichung bzw. die Abweichungen opak dargestellt werden. Alternativ oder zusätzlich können die Abweichungen natürlich auch farbig, durch Symbole oder anderweitig gekennzeichnet bzw. hervorgehoben werden.

Weiterhin hat es sich als vorteilhaft gezeigt, wenn beim Vorliegen einer Abweichung zwischen dem Abbild und dem Soll-Abbild wenigstens ein für die Abweichung relevanter Prozessparameter des Fertigungsverfahrens variiert wird. Hierdurch können Fehlstellenbildungen bei zukünftigen Bauteilen verringert oder vollständig vermieden und die Qualität der mittels des generativen Fertigungsverfahrens hergestellten Bauteile dementsprechend verbessert werden.

Ein weiterer Aspekt der Erfindung betrifft eine Vorrichtung zur Durchführung eines Verfahrens nach einem der vorhergehenden Ausführungsbeispiele. Die erfindungsgemäße Vorrichtung umfasst dabei zumindest eine generative Fertigungseinrichtung umfassend eine Einrichtung zum selektiven Laserschmelzen und/oder zum selektiven Lasersintern zum Herstellen eines Bauteils, insbesondere eines Bauteils für ein Flugzeugtriebwerk, eine Detektionseinrichtung, welche ausgebildet ist, eine einen Energieeintrag in das Bauteil charakterisierende Messgröße während der Herstellung des Bauteils ortsaufgelöst zu erfassen, wobei die Detektionseinrichtung außerhalb eines Strahlengangs eines Lasers der Fertigungseinrichtung angeordnet ist und wobei die Detektionseinrichtung ausgebildet ist, wenigstens zwei Schichtbilder des Bauteils während seiner Herstellung durch selektives Laserschmelzen und/oder durch selektives Lasersintern zu ermitteln, eine Recheneinrichtung, mittels welcher ein dreidimensionales Abbild des Bauteils anhand der ermittelten Schichtbilder erzeugbar ist, wobei das dreidimensionale Abbild das gesamte Bauteil und/oder einen verwendeten Bauraum der generativen Fertigungseinrichtung überlagerungsfrei abbildet, wobei wenigstens ein Schichtbild aus 100 bis 1000 Einzelbildern zusammenzusetzen ist oder aus Einzelbilden zusammenzusetzen ist, die jeweils zwischen 0,1 cm2 und 1,0 cm2 der Bauteilschicht abbilden und die jeweils eine Breite zwischen 0,1 mm und 0,5 mm der Bauteilschicht abbilden, wobei für jedes Einzelbild eine Belichtungszeit zwischen 1,0 ms und 5000 ms einzustellen ist; und eine Anzeigeeinrichtung, mittels welcher das Abbild des Bauteils darstellbar ist. Hierdurch ist eine besonders schnelle, einfache und detaillierte Kontrolle und Beurteilung der Fertigungsqualität des Bauteils ermöglicht. Weitere sich ergebende Vorteile sind den vorhergehenden Beschreibungen zum ersten Erfindungsaspekt zu entnehmen.

Indem die generative Fertigungseinrichtung eine Einrichtung zum selektiven Laserschmelzen und/oder zum selektiven Lasersintern umfasst bzw. ist, können Bauteile mit beliebigen dreidimensionalen Geometrien hergestellt und im Hinblick auf ihre Fertigungsqualität beurteilt werden, deren mechanischen Eigenschaften weitgehend denen des verwendeten Werkstoffs entsprechen. Geeignete Werkstoffe umfassen beispielsweise Metalle oder Metalllegierungen wie Stahl, Aluminium und Aluminiumlegierungen, Titan und Titanlegierungen, Kobalt- und/oder Chrom-Legierungen, Nickelbasislegierungen und Kupferlegierungen sowie keramische Werkstoffe und Kunststoffe.

In einer weiteren vorteilhaften Ausgestaltung der Erfindung ist vorgesehen, dass die Detektionseinrichtung außerhalb eines Bauraums der Fertigungseinrichtung angeordnet ist. Hierdurch ist vorteilhaft sichergestellt, dass sich die Detektionseinrichtung nicht im Strahlengang befindet und dass der Laser keine Energieverluste durch optische Elemente wie etwa halbtransparente Spiegel erleidet. Weiterhin beeinflusst die Detektionseinrichtung somit nicht das Herstellungsverfahren, ist einfach austauschbar bzw. nachrüstbar und kann auch mobil eingesetzt werden.

In einer weiteren vorteilhaften Ausgestaltung der Erfindung ist vorgesehen, dass die Detektionseinrichtung eine IR-sensitive sCMOS-Kamera umfasst. Sensoren dieser Bauart sind in der Lage, die meisten erhältlichen CCD-Bildsensoren zu ersetzen. Im Vergleich zu den bisherigen Generationen von CCD- und/oder CMOS-basierten Sensoren bzw. Kameras bieten Kameras auf Basis von sCMOS-Sensoren verschiedene Vorteile wie beispielsweise ein sehr niedriges Ausleserauschen, eine hohe Bildrate, einen großen Dynamikbereich, eine hohe Quanteneffizienz, eine hohe Auflösung sowie eine große Sensorfläche. Dies ermöglicht eine besonders gute Qualitätsprüfung des hergestellten Bauteils.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine ausschnittsweise Perspektivansicht einer erfindungsgemäßen Vorrichtung, welche eine generative Fertigungseinrichtung umfasst, an welcher eine IR-sensitive sCMOS-Kamera als Detektionseinrichtung angeordnet ist;
- Fig. 2: eine seitliche Prinzipdarstellung der in Fig. 1 gezeigten Fertigungseinrichtung;
- Fig. 3: ein Schichtbild von mehreren in einem Bauraum der Fertigungseinrichtung hergestellten Bauteilen;
- Fig. 4: eine vergrößerte Darstellung des in Fig. 3 gezeigten Details IV;
- Fig. 5: ein dreidimensionales Abbild der im Bauraum der Fertigungseinrichtung hergestellten Bauteile; und
- Fig. 6: eine perspektivische Darstellung des dreidimensionalen Abbilds eines Bauteils, wobei zusätzlich Abweichung zwischen dem Abbild und einem Soll-Abbild des Bauteils kenntlich gemacht sind.

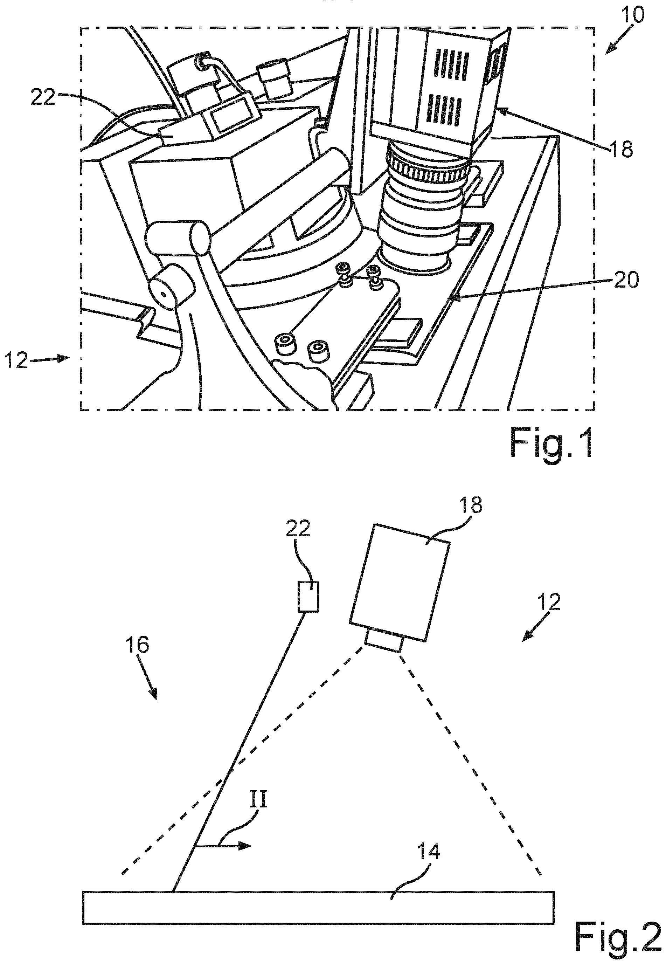

Fig. 1 zeigt eine ausschnittsweise Perspektivansicht einer erfindungsgemäßen Vorrichtung 10, welche eine generative Fertigungseinrichtung 12 zum Herstellen eines Bauteils 14 für ein Flugzeugtriebwerk umfasst. Die generative Fertigungseinrichtung 12 selbst ist vorliegend als an sich bekannte, selektive Laserschmelzanlage (SLM) ausgebildet. Fig. 1 wird im Folgenden in Zusammenschau mit Fig. 2 erläutert werden, in welcher eine seitliche Prinzipdarstellung der in Fig. 1 gezeigten Fertigungseinrichtung 12 abgebildet ist. Man erkennt, dass außerhalb eines Bauraums 16 der Fertigungseinrichtung 12 eine Detektionseinrichtung 18 angeordnet ist, welche ausgebildet ist, eine einen Energieeintrag in das Bauteil 14 charakterisierende Messgröße während der Herstellung des Bauteils 14 ortsaufgelöst als Schichtbild zu erfassen. Die Detektionseinrichtung 18 umfasst vorliegend eine IR-sensitive sCMOS-Kamera mit 5,5 Megapixeln und einer Bildwiederholrate von 100 Hz. Obwohl grundsätzlich auch andere Sensortypen, Schwarzweiß-Kameras oder dergleichen verwendet werden können, liefert ein Farbsensor bzw. ein Sensor mit einem breiten Spektralbereich vergleichsweise mehr Informationen, welche eine dementsprechend genauere Beurteilung des Bauteils 14 erlauben. Zwischen dem Bauraum 16 und der Detektionseinrichtung 18 ist ein Laser-Schutzglas 20 angeordnet, um eine Beschädigung des sCMOS-Sensors der Kamera durch einen Laser 22 der Fertigungseinrichtung 12 zu verhindern. Die Detektionseinrichtung 18 befindet sich somit außerhalb des Bauraums 16 und des Strahlengangs II des Lasers 22 der Fertigungseinrichtung 12. Hierdurch ist vorteilhaft sichergestellt, dass sich die Detektionseinrichtung 18 nicht im Strahlengang II befindet und dass der Laser 22 dementsprechend keine Energieverluste durch optische Elemente wie halbtransparente Spiegel, Gitter oder dergleichen erleidet. Weiterhin beeinflusst die Detektionseinrichtung 18 nicht das Herstellungsverfahren des Bauteils 14 und ist zudem einfach austauschbar bzw. nachrüstbar.

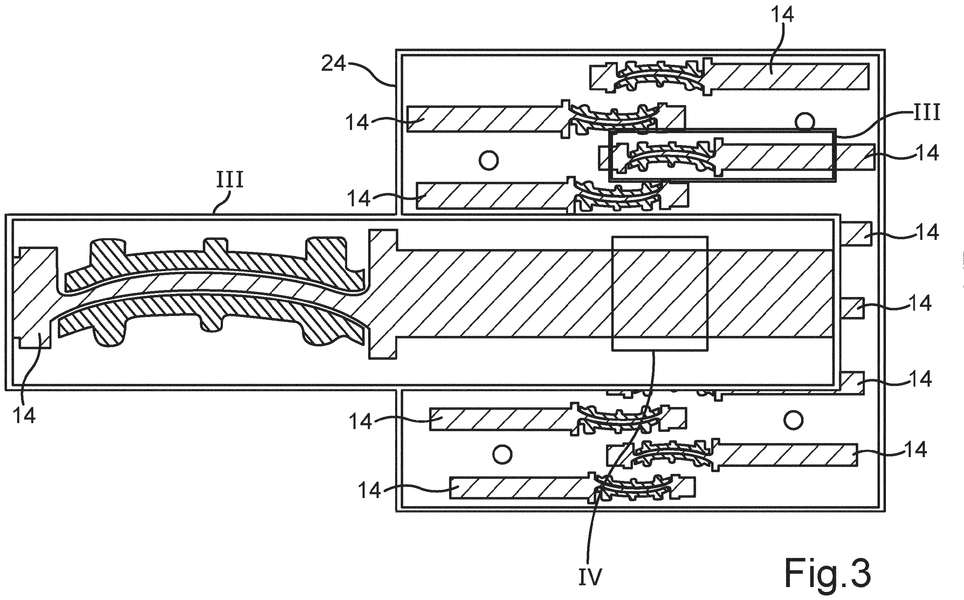

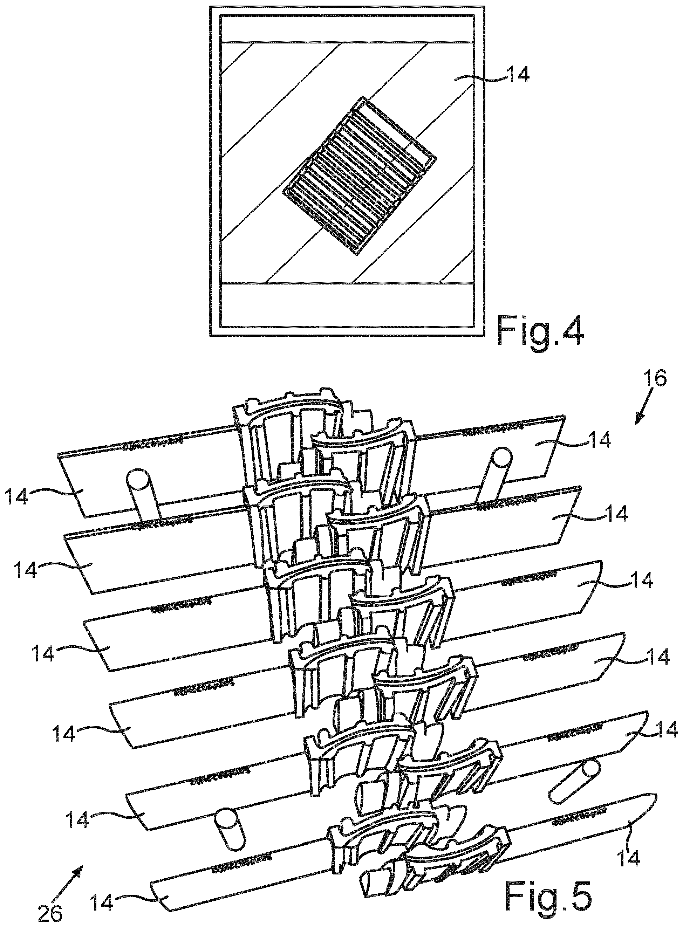

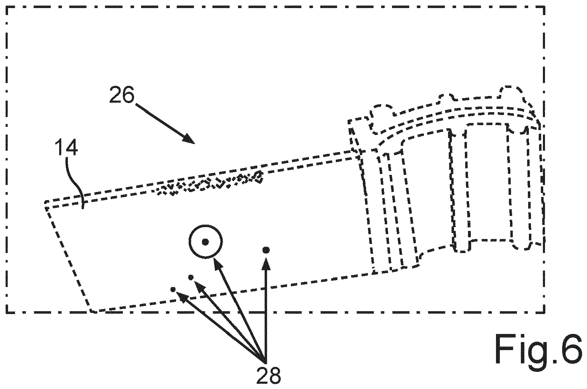

Zum Herstellen des Bauteils 14, welches vorliegend als Rotorschaufel ausgebildet ist, werden in an sich bekannter Weise dünne Pulverschichten einer hochtemperaturfesten Metalllegierung auf eine Plattform (nicht gezeigt) der Fertigungseinrichtung 12 aufgebracht, mit Hilfe des Lasers 22 lokal aufgeschmolzen und durch Abkühlen verfestigt. Anschließend wird die Plattform abgesenkt, eine weitere Pulverschicht aufgebracht und erneut verfestigt. Dieser Zyklus wird solange wiederholt, bis das Bauteil 14 hergestellt ist. Das Bauteil 14 kann beispielsweise aus bis zu 2000 Bauteilschichten bestehen bzw. eine Gesamtschichthöhe von 40 mm aufweisen. Das fertige Bauteil 14 kann anschließend weiterbearbeitet oder sofort verwendet werden. Der durch die Laserstrahlung erfolgte Energieeintrag in die einzelnen Bauteilschichten wird dabei für jede Bauteilschicht mit Hilfe der Detektionseinrichtung 18 als thermographisches Schichtbild 24 (vgl. Fig. 3) ermittelt. Nach Fertigstellung des Bauteils 14 werden die einzelnen Schichtbilder (Tomogramme) nach Art einer Computertomographie mit Hilfe einer Recheneinrichtung (nicht gezeigt) zu einem Abbild 26 (vgl. Fig. 5 u. Fig. 6) des Bauteils 14 zusammengefügt. Die thermographischen Messgrößen und gegebenenfalls weitere hieraus abgeleitete Informationen werden anschließend ortsaufgelöst und beispielsweise über Helligkeitswerte und/oder Farben kodiert mittels einer Anzeigeeinrichtung (nicht gezeigt) in Form des Abbilds 26 visualisiert.

Fig. 3 zeigt exemplarisch ein Schichtbild 24 von mehreren Bauteilen 14, die gemeinsam im Bauraum 16 der Fertigungseinrichtung 12 hergestellt werden. Man erkennt, dass das Schichtbild 24 den gesamten Bauraum 16 überlappungsfrei abbildet. Mit dem Bezugszeichen III ist eine Detailvergrößerung eines der Bauteile 14 gekennzeichnet. Weiterhin zeigt Fig. 4 eine zusätzliche Vergrößerung des Details IV. Man erkennt, dass durch die optische Thermographie nicht nur geometrische Informationen, sondern auch Informationen über die lokale Temperaturverteilung in der betreffenden Bauteilschicht und damit über den Energieeintrag in die einzelne Schweißbahn beim SLM-Prozess erhalten werden. Dabei ist grundsätzlich vorgesehen, dass das Schichtbild 24 aus mehreren Einzelbildern zusammengesetzt ist. Beispielsweise kann das Schichtbild 24 je nach Fläche des Bauraums 16 aus bis zu 1000 Einzelbildern oder mehr pro Bauteilschicht zusammengesetzt werden bzw. aus Einzelbildern, die jeweils zwischen 0,1 cm² und 1,0 cm² der einzelnen Bauteilschicht abbilden. Die Belichtungszeit pro Bild liegt bedarfsweise zwischen 1 ms und 5000 ms, bevorzugt zwischen 50 ms und 500 ms. Grundsätzlich kann vorgesehen sein, dass die vom Laserstrahl zurückgelegte Strecke pro Einzelbild zwischen 10 mm und 120 mm, also beispielsweise 10 mm, 20 mm, 30 mm, 40 mm, 50 mm, 60 mm, 70 mm, 80 mm, 90 mm, 100 mm, 110 mm oder 120 mm beträgt. Weiterhin kann grundsätzlich vorgesehen sein, dass jedes Schichtbild 24 innerhalb von 2 Minuten ermittelt wird, um eine zu starke Abkühlung der Bauteilschichten und einen damit einhergehenden Informationsverlust zu vermeiden.

Fig. 5 zeigt das dreidimensionale Abbild 26 der im Bauraum 16 der Fertigungseinrichtung 12 gemeinsam hergestellten Bauteile 14. Das Abbild 26 wurde mit Hilfe einer Recheneinrichtung formal durch Stapeln der einzelnen Schichtbilder 24 zu einem Bildstapel erzeugt und wird mittels einer geeigneten Anzeigeeinrichtung (nicht gezeigt), beispielsweise einem Monitor dargestellt. Zur besseren Kontrolle der Bauteilqualitäten kann grundsätzlich vorgesehen sein, dass die Darstellung des Abbilds 26 manipulierbar ist und das Abbild 26 beispielsweise gedreht, vergrößert, verkleinert, verschoben, umgefärbt oder als Drahtgittermodell dargestellt werden kann. Weiterhin kann vorgesehen sein, dass bestimmte Bereiche des Abbilds 26, beispielsweise einzelne Bauteile 14, ein- oder ausgeblendet werden können.

Fig. 6 zeigt eine perspektivische Darstellung des dreidimensionalen Abbilds 26 eines Bauteils 14, wobei zusätzlich Abweichung 28 zwischen dem Abbild 26 und einem Soll-Abbild des Bauteils 14 ortsaufgelöst kenntlich gemacht sind. Das Abbild 26 des Bauteils 14 ist hierzu semi-transparent dargestellt, während die Abweichungen 28 opak dargestellt sind und gegebenenfalls durch zusätzliche Symbole wie Kreise oder dergleichen kenntlich gemacht werden können. Dies ermöglicht eine besonders schnelle und zuverlässige Beurteilung der Fertigungsqualität des Bauteils 14. Die Abweichungen 28 können beispielsweise durch innere Defekte, Fehlstellen, Ungänzen, Fremdeinschlüsse oder durch Schwankungen in der Pulverqualität, der Pulverschichtdicke oder sonstige Inhomogenitäten im Bauraum 16 entstehen. Falls das Bauteil 14 aufgrund der vorliegenden Abweichungen 28 außerhalb seiner Fertigungstoleranzen liegt, wird wenigstens ein für die Abweichung 28 relevanter Prozessparameter des Fertigungsverfahrens derart variiert, dass die Abweichungen 28 bei der Herstellung weiterer Bauteile 14 verringert oder möglichst vollständig vermieden werden.

## Patentansprüche

1. Verfahren zum Abbilden wenigstens eines dreidimensionalen Bauteils (14), das mittels eines generativen Fertigungsverfahrens hergestellt wird, folgende Schritte umfassend:
- Ermitteln von wenigstens zwei Schichtbildern (24) des Bauteils (14) während seiner Herstellung durch selektives Laserschmelzen und/oder durch selektives Lasersintern mittels einer Detektionseinrichtung (18), welche ausgebildet ist, eine einen Energieeintrag in das Bauteil (14) charakterisierende Messgröße ortsaufgelöst zu erfassen, wobei sich die Detektionseinrichtung (18) außerhalb des Strahlengangs (II) eines Lasers (22) der Fertigungseinrichtung (12) befindet und wobei wenigstens ein Schichtbild (24) aus 100 bis 1000 Einzelbildern zusammengesetzt wird oder aus Einzelbilden zusammengesetzt wird, die jeweils zwischen 0,1 cm² und 1,0 cm² der Bauteilschicht abbilden und die jeweils eine Breite zwischen 0,1 mm und 0,5 mm der Bauteilschicht abbilden, wobei für jedes Einzelbild eine Belichtungszeit zwischen 1,0 ms und 5000 ms eingestellt wird;
- Erzeugen eines dreidimensionalen Abbilds (26) des Bauteils (14) anhand der ermittelten Schichtbilder (24), die das gesamte Bauteil (14) und/oder einen verwendeten Bauraum (16) des generativen Fertigungsverfahrens überlagerungsfrei abbilden, mittels einer Recheneinrichtung; und
- Darstellen des Abbilds (26) mittels einer Anzeigeeinrichtung.

2. Verfahren nach Anspruch 1,
**dadurch gekennzeichnet, dass**
für jede Bauteilschicht ein Schichtbild (24) ermittelt wird.

3. Verfahren nach einem der Ansprüche 1 oder 2,
**dadurch gekennzeichnet, dass**
die Detektionseinrichtung (18) einen hochauflösenden Detektor und/oder einen IR-sensitiven Detektor, insbesondere einen CMOS- und/oder sCMOS- und/oder CCD-Sensor zum Erfassen von IR-Strahlung als Messgröße umfasst.

4. Verfahren nach einem der Ansprüche 1 bis 3,
**dadurch gekennzeichnet, dass**
für jedes Einzelbild eine Belichtungszeit zwischen 50 ms und 500 ms eingestellt wird.

5. Verfahren nach einem der Ansprüche 1 bis 4,
**dadurch gekennzeichnet, dass**
das Abbild (26) des Bauteils (14) mittels der Recheneinrichtung mit einem Soll-Abbild des Bauteils (14) verglichen wird.

6. Verfahren nach Anspruch 5,
**dadurch gekennzeichnet, dass**
als Soll-Abbild ein Datenmodell und/oder ein Röntgen-Abbild des Bauteils (14) und/oder ein Abbild eines Referenz-Bauteils verwendet wird.

7. Verfahren nach Anspruch 5 oder 6,
**dadurch gekennzeichnet, dass**
Abweichungen (28) zwischen dem Abbild (26) und dem Soll-Abbild mittels der Anzeigeeinrichtung dargestellt werden.

8. Verfahren nach einem der Ansprüche 5 bis 7,
**dadurch gekennzeichnet, dass**
beim Vorliegen einer Abweichung (28) zwischen dem Abbild (26) und dem Soll-Abbild wenigstens ein für die Abweichung (28) relevanter Prozessparameter des Fertigungsverfahrens variiert wird.

9. Vorrichtung (10) zur Durchführung eines Verfahrens nach einem der Ansprüche 1 bis 8, umfassend:
- eine generative Fertigungseinrichtung (12) umfassend eine Einrichtung zum selektiven Laserschmelzen und/oder zum selektiven Lasersintern zum Herstellen eines Bauteils (14), insbesondere eines Bauteils (14) für ein Flugzeugtriebwerk;
- eine Detektionseinrichtung (18), welche ausgebildet ist, eine einen Energieeintrag in das Bauteil (14) charakterisierende Messgröße während der Herstellung des Bauteils (14) ortsaufgelöst zu erfassen, wobei die Detektionseinrichtung (18) außerhalb eines Strahlengangs (II) eines Lasers (22) der Fertigungseinrichtung (12) angeordnet ist und wobei die Detektionseinrichtung (18) ausgebildet ist, wenigstens zwei Schichtbilder (24) des Bauteils (14) während seiner Herstellung durch selektives Laserschmelzen und/oder durch selektives Lasersintern zu ermitteln,
- eine Recheneinrichtung, mittels welcher ein dreidimensionales Abbild (26) des Bauteils (14) anhand der ermittelten Schichtbilder (24) erzeugbar ist, wobei das dreidimensionale Abbild (26) das gesamte Bauteil (14) und/oder einen verwendeten Bauraum (16) der generativen Fertigungseinrichtung (12) überlagerungsfrei abbildet; wobei wenigstens ein Schichtbild (24) aus 100 bis 1000 Einzelbildern zusammenzusetzen ist oder aus Einzelbilden zusammenzusetzen ist, die jeweils zwischen 0,1 cm2 und 1,0 cm2 der Bauteilschicht abbilden und die jeweils eine Breite zwischen 0,1 mm und 0,5 mm der Bauteilschicht abbilden, wobei für jedes Einzelbild eine Belichtungszeit zwischen 1,0 ms und 5000 ms einzustellen ist; und
- eine Anzeigeeinrichtung, mittels welcher das Abbild (26) des Bauteils (14) darstellbar ist.

10. Vorrichtung (10) nach Anspruch 9,
**dadurch gekennzeichnet, dass**
die Detektionseinrichtung (18) außerhalb eines Bauraums (16) der Fertigungseinrichtung (12) angeordnet ist.

11. Vorrichtung (10) nach Anspruch 9 oder 10,
**dadurch gekennzeichnet, dass**
die Detektionseinrichtung (18) eine IR-sensitive sCMOS-Kamera umfasst.

## Claims

1. Method for imaging at least one three-dimensional component (14) that is produced by means of a generative production method, comprising the following steps:
- detecting at least two slice images (24) of the component (14), during the production thereof by selective laser melting and/or selective laser sintering, by means of a detection device (18) which is designed to record, in a spatially resolved manner, a measurement variable that characterizes an energy input into the component (14), wherein the detection device (18) is located outside of the beam path (II) of a laser (22) of the production device (12) and wherein at least one slice image (24) is assembled from 100 to 1000 frames or assembled from frames which each depict between 0.1 cm² and 1.0 cm² of the component layer and which each depict a width of between 0.1 mm and 0.5 mm of the component layer, wherein an exposure time for each frame is set at between 1.0 ms and 5000 ms;
- generating a three-dimensional image (26) of the component (14) by means of a computing device on the basis of the detected slice images (24) which depict the entire component (14) and/or a used installation space (16) of the generative production method in an overlap-free manner; and
- displaying the image (26) by means of a display device.

2. Method according to claim 1, **characterized in that** a slice image (24) is detected for each component layer.

3. Method according to either claim 1 or claim 2, **characterized in that** the detection device (18) comprises a high-resolution detector and/or an IR-sensitive detector, in particular a CMOS and/or sCMOS and/or CCD sensor, for recording IR radiation as a measurement variable.

4. Method according to any of claims 1 to 3, **characterized in that** an exposure time of between 50 ms and 500 ms is set for each frame.

5. Method according to any of claims 1 to 4, **characterized in that** the image (26) of the component (14) is compared with a target image of the component (14) by means of the computing device.

6. Method according to claim 5, **characterized in that** a data model and/or an X-ray image of the component (14) and/or an image of a reference component is used as the target image.

7. Method according to either claim 5 or claim 6, **characterized in that** discrepancies (28) between the image (26) and the target image are displayed by means of the display device.

8. Method according to any of claims 5 to 7, **characterized in that**, when a discrepancy (28) between the image (26) and the target image is present, at least one process parameter of the production method that is relevant to the discrepancy (28) is varied.

9. Apparatus (10) for carrying out a method according to any of claims 1 to 8, comprising:
- a generative production device (12) comprising a device for selective laser melting and/or selective laser sintering for producing a component (14), in particular a component (14) for an aircraft engine;
- a detection device (18) which is designed to record, in a spatially resolved manner, during the production of the component (14), a measurement variable that characterizes an energy input into the component (14), wherein the detection device (18) is arranged outside of a beam path (II) of a laser (22) of the production device (12) and wherein the detection device (18) is designed to detect at least two slice images (24) of the component (14) during the production thereof by laser melting and/or selective laser sintering;
- a computing device, by means of which a three-dimensional image (26) of the component (14) can be generated on the basis of the detected slice images (24), wherein the three-dimensional image (26) depicts the entire component (14) and/or a used installation space (16) of the generative production device (12) in an overlap-free manner, wherein at least one slice image (24) is assembled from 100 to 1000 frames or assembled from frames which each depict between 0.1 cm² and 1.0 cm² of the component layer and which each depict a width of between 0.1 mm and 0.5 mm of the component layer, wherein an exposure time for each frame is set at between 1.0 ms and 5000 ms; and
- a display device by means of which the image (26) of the component (14) can be displayed.

10. Apparatus (10) according to claim 9, **characterized in that** the detection device (18) is arranged outside of an installation space (16) of the production device (12).

11. Apparatus (10) according to either claim 9 or claim 10, **characterized in that** the detection device (18) comprises an IR-sensitive sCMOS camera.

## Revendications

1. Procédé pour la représentation d'au moins un élément structurel tridimensionnel (14), réalisé selon un processus de fabrication générative, comprenant les étapes suivantes
- Génération d'au moins deux images tomographiques (24) de l'élément structurel (14) pendant sa fabrication par fusion sélective laser et/ou frittage sélectif par laser à l'aide d'un dispositif de détection (18), qui est conçu pour saisir une grandeur caractérisant un apport d'énergie dans l'élément structurel (14) en résolution locale, le dispositif de détection (18) étant situé en dehors du trajet optique (II) d'un laser (22) du dispositif de fabrication (12)
et au moins une image tomographique (24) se composant de 100 à 1 000 images individuelles ou d'images individuelles, qui forment respectivement entre 0,1 cm² et 1,0 cm² de la couche d'éléments structurels et forment respectivement une largeur entre 0,1 mm et 0,5 mm de la couche d'éléments structurels, une durée d'exposition entre 1,0 m et 5 000 ms étant réglée pour chaque image ;
- Production d'une image tridimensionnelle (26) de l'élément structurel (14) à l'aide des images tomographiques fournies (24), qui forment l'élément structurel complet (14) et/ou un espace de construction utilisé (16) du procédé de fabrication générative sans chevauchement, à l'aide d'un moyen de calcul ; et
- Représentation de l'image (26) à l'aide d'un dispositif d'affichage.

2. Procédé selon la revendication 1, **caractérisé en ce qu'**une image tomographique (24) est produite pour chaque couche d'éléments.

3. Procédé selon une des revendications 1 ou 2, **caractérisé en ce que** le dispositif de détection (18) comprend un détecteur haute résolution et/ou un capteur sensible aux infra-rouges, en particulier un capteur CMOS et/ou sCMOS et/ou CCD pour la saisie d'un faisceau IR sous forme de grandeur.

4. Procédé selon une des revendications 1 à 3 **caractérisé en ce qu'**une exposition est réglée entre 50 ms et 500 ms pour chaque image individuelle.

5. Procédé selon une des revendications 1 à 4, **caractérisé en ce que** l'image (26) de l'élément structurel (14) est comparée à une image définie de l'élément structurel (14) à l'aide du moyen de calcul.

6. Procédé selon la revendication 5, **caractérisé en ce qu'**un modèle de données et/ou une radiographie de l'élément structurel (14) et/ou une image de l'élément structurel de référence est utilisé(e) comme image définie.

7. Procédé selon la revendication 5 ou 6, **caractérisé en ce que** les écarts (28) entre l'image (26) et l'image définie sont représentés par le dispositif d'affichage.

8. Procédé selon la revendication 5 à 7, **caractérisé en ce que**, en présence d'un écart (28) entre l'image (26) et l'image définie, au moins un paramètre de processus du procédé de fabrication important pour l'écart (28) est modifié.

9. Dispositif (10) pour la mise en oeuvre d'un procédé selon une des revendications 1 à 8, comprenant :
- un dispositif pour la fabrication générative (12) comprenant une installation de fusion sélective laser et/ou frittage sélectif par laser pour fabriquer un élément structurel (14), en particulier un élément structurel (14) pour un moteur d'avion ;
- un dispositif de détection (18), qui est conçu pour saisir en résolution locale une grandeur caractérisant un apport d'énergie dans l'élément structurel (14) pendant la fabrication de l'élément structurel (14), le dispositif de détection (18) étant situé en dehors du trajet optique (II) d'un laser (22) du dispositif de fabrication (12) et le dispositif de détection (18) étant conçu pour fournir au moins deux images tomographiques (24) de l'élément (14) pendant sa fabrication par fusion sélective laser et/ou frittage sélectif par laser ;
- un moyen de calcul, à l'aide duquel une image tridimensionnelle (26) de l'élément structurel (14) peut être créée au moyen des images tomographiques fournies (24), l'image tridimensionnelle (26) représentant l'élément complet (14) et/ou un espace de montage utilisé (16) du dispositif de fabrication générative (12) sans superposition ; au moins une image tomographique (24) devant être composée à partir de 100 à 1 000 images individuelles ou d'images individuelles qui forment respectivement entre 0,1 cm² et 1,0 cm² de la couche d'éléments structurels et formant respectivement une largeur entre 0,1 mm et 0,5 mm de la couche d'éléments structurels, une durée d'exposition de 1,0 m à 5 000 ms étant réglée pour chaque image ; et
- un dispositif d'affichage, à l'aide duquel l'image (26) de l'élément structurel (14) peut être représentée.

10. Dispositif (10) selon la revendication 9, **caractérisé en ce que** le dispositif de détection (18) est positionné en dehors d'un espace de montage (16) du dispositif de fabrication (12).

11. Dispositif (10) selon la revendication 9 ou 10, **caractérisé en ce que** le dispositif de détection (18) comprend une caméra sCMOS sensible aux infra-rouges.
